# EUROPÄISCHE PATENTSCHRIFT

(11) **EP 2 923 570 B1**
(45) Veröffentlichungstag und Bekanntmachung des Hinweises auf die Patenterteilung: **22.04.2020**
(21) Anmeldenummer: 15401026.8
(22) Anmeldetag: 23.03.2015
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE À CULTURES

(30) Priorität: 28.03.2014 DE 102014104381; 04.07.2014 DE 102014109371
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Kretschmar, Tom, 04249 Leipzig (DE); Wolf, Jan, 49078 Osnabrück (DE)

(56) Entgegenhaltungen:
- EP-A1- 1 097 637
- EP-A1- 1 637 473
- WO-A1-2008/003315
- US-A- 3 450 431
- US-A- 3 979 007
- US-A1- 2006 266 853
- US-A1- 2009 014 447

## Beschreibung

Die Erfindung betrifft eine landwirtschaftliche Feldspritze gemäß des Oberbegriffes des Patentanspruches 1.

Eine derartige landwirtschaftliche Feldspritze ist in EP 1 097 637 A1 offenbart.

Eine weitere derartige landwirtschaftliche Feldspritze ist in DE 20 2006 010 074 U1 beschrieben. Diese Feldspritze wird zum dosierten Ausbringen Spritzbrühe, die aus mit vorzugsweise als Frischwasser verwendeter Verdünnungsflüssigkeit zu einer Spritzbrühe mit Pflanzenbehandlungsmitteln und/oder Düngemitteln verdünnt ist, verwendet. Die Spritzbrühe wird in einem Spritzmitteltank mitgeführt. Die Feldspritze weist weiterhin einen zumindest eine Verdünnungsflüssigkeitszuführeinrichtung und zumindest eine Einfüllöffnung aufweisenden Einspülbehälter auf. Dem Einspülbehälter ist ein wahlweise in eine die Einfüllöffnung freigebende Öffnungsstellung oder in eine die Einlauföffnung verschließende Verschlussstellung verschwenkbarer Deckel zugeordnet.

Der verschwenkbare Deckel wird zum Einfüllen von Pflanzenbehandlungsmitteln und/oder Düngemitteln in eine Öffnungsposition gebracht. Häufig befindet sich der Deckel dann seitlich neben dem Einspülbehälter. In einigen Fällen lässt sich der Deckel auch in eine etwa horizontale Position fixieren, so dass er als Abstellfläche für Behältnisse verwendet werden kann. Wenn dann durch verschütten die in den Einspülbehälter einzuspülenden Pflanzenbehandlungsmittel und oder Düngemittel auf die nach oben weisenden Seite des Deckels gelangen, besteht die Gefahr, dass diese Mittel dann seitlich von der nach oben weisenden Seite des Deckels einfach herunterfließen und nicht in den Einspülbehälter gelangen.

Der Erfindung liegt die Aufgabe zu Grunde, sicherzustellen, dass die auf die nach oben weisende Seite des Deckels gelangende Flüssigkeiten sicher in den Einspülbehälter gelangen.

Diese Aufgabe der erfindungsgemäß durch durch die kennzeichnenden Merkmale des Anspruchs 1 gelöst.

Infolge dieser Maßnahme ist in jedem Falle sichergestellt, dass die sich auf der nach oben weisenden Fläche des Deckels gelangende Flüssigkeit in jedem Falle sicher in den Einspülbehälter fließt.

In einfacher Weise lässt sich der Deckel in die erfindungsgemäße Öffnungsstellung dadurch bringen, dass der Deckel aus seiner Verschlussstellung in seine Öffnungsstellung und umgedreht jeweils um etwa 170° verschwenkbar ist.

Damit der Deckel in seiner Öffnungsstellung sicher in der erfindungsgemäßen Position gehalten wird, ist vorgesehen, dass der Deckel in seiner Öffnungsstellung mittels einer zwischen dem Deckel und dem Einspülbehälter angeordneten verstellbaren Anschlageinrichtung fixiert wird.

Um Sicherzustellen, dass auch von der unteren äußeren Kante abtropfen Flüssigkeitsreste sicher in den Einspülbehälter gelangen, ist erfindungsgemäß vorgesehen, dass der Deckel in seiner Öffnungsstellung mit seinem der Einfüllöffnung des Einspülbehälter benachbarten Seite den äußeren oberen Rand des Einzelbehälters in Richtung der Einfüllöffnung überragt.

Um zu verhindern, dass seitlich sich auf der in der Öffnungsstellung oberen Seite des Deckels befindliche Flüssigkeiten seitlich von dem Deckel herunterfließen und nicht in den Einspülbehälter geführt werden, ist vorgesehen, dass der seitliche Bereich und oder die Seitenränder auf der sich in Öffnungsstellung auf der oberen Seite befindlichen Fläche des Deckels gegenüber dem mittleren Bereich dieser Fläche erhöht ausgebildet sind.

Eine sichere Leitung des sich auf der in Öffnungsstellung oberen Seite des Deckels befindliche Flüssigkeit in den Vorratsbehälter zu gewährleisten, ist in einer Ausführungsform vorgesehen, dass die Oberseitenfläche des Deckels in Öffnungsstellung des Deckels konkav ausgebildet ist.

In einer anderen Ausführungsform ist zur sicheren Leitung der sich auf der in Öffnungsstellung des Vorratsbehälters oberen Seite befindlichen Flüssigkeit in den Einspülbehälter vorgesehen, dass im äußeren Bereich der Oberseitenfläche des Deckels in Öffnungsstellung des Deckels aus der Oberflächenseite dieser Fläche herausragende vorzugsweise zumindest in U-Form umlaufende Seitenränder angeordnet sind, die im Bereich der Einfüllöffnung des Vorratsbehälter unterbrochen oder nicht vorhanden sind.

Um in erfindungsgemäßer Weise eine sichere Einleitung der sich auf der in Öffnungsstellung oberen Seite des Deckels befindlichen Flüssigkeit in den Einspülbehälter zu gewährleisten, ist vorgesehen, dass der Deckel in seinem die Einfüllöffnung überragenden Bereich nach unten abgebogen ist und/oder zumindest eine sich im Bereich der Einfüllöffnung befindliche Abtropfkante aufweist. Hierbei ist die Ablaufkante so angeordnet, dass sie in geschlossener Position des Deckels die Behälterumrandung auf ihrer Unterseite untergreift. Hierdurch ist eine geschlossene Abdichtung des oberen Randes des Einspülbehälters gegenüber dem Deckel in seiner geschlossenen Position möglich. Hier kann dann entweder die Dichtung in umlaufender Weise an dem Deckel auf seiner dem Einspülbehälter zugewandten Seite in seiner geschlossenen Position oder an der oberen Behälterumrandung des Einspülbehälters angeordnet sein.

Eine einfache Anordnung ergibt sich dadurch, dass die umlaufende Dichtung und die erhöhten Stege getrennt und/oder nebeneinander angeordnet sind

Weitere Einzelheiten der Erfindung sind der Beispielsbeschreibung zu entnehmen. Die Zeichnungen zeigen
- Fig.1: den Einspülbehälter mit sich Schließstellung befindlichem Deckel in perspektivischer Darstellung,
- Fig.2: den Einspülbehälter mit sich Öffnungsstellung befindlichem Deckel in perspektivischer Darstellung,
- Fig.3: den Einspülbehälter mit sich Öffnungsstellung befindlichem Deckel in anderen perspektivischer Darstellung,
- Fig.4: den Einspülbehälter mit sich Schließstellung befindlichem Deckel in der Schnittdarstellung IV - IV,
- Fig.5: die Zuordnung des Deckels zu dem Betätigungsansatzelement in der Darstellungsweise nach Fig. 4 in vergrößerter und ausschnittsweiser Darstellung,
- Fig.6: den Einspülbehälter mit sich Schließstellung befindlichem Deckel und dem Beginn der Betätigung des Abschaltventils der Verdünnungsflüssigkeitseinlassmündung in der Darstellungsweise nach in Fig. 4 und 5 und
- Fig. 7: den Einspülbehälter mit sich Schließstellung befindlichem Deckel und dem Ende der Betätigung des Abschaltventils der Verdünnungsflüssigkeitseinlassmündung in der Darstellungsweise nach in Fig. 4 bis 6.

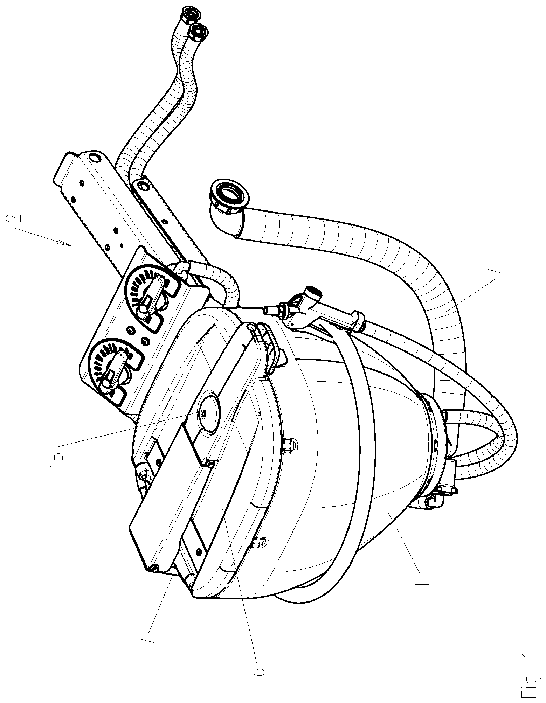

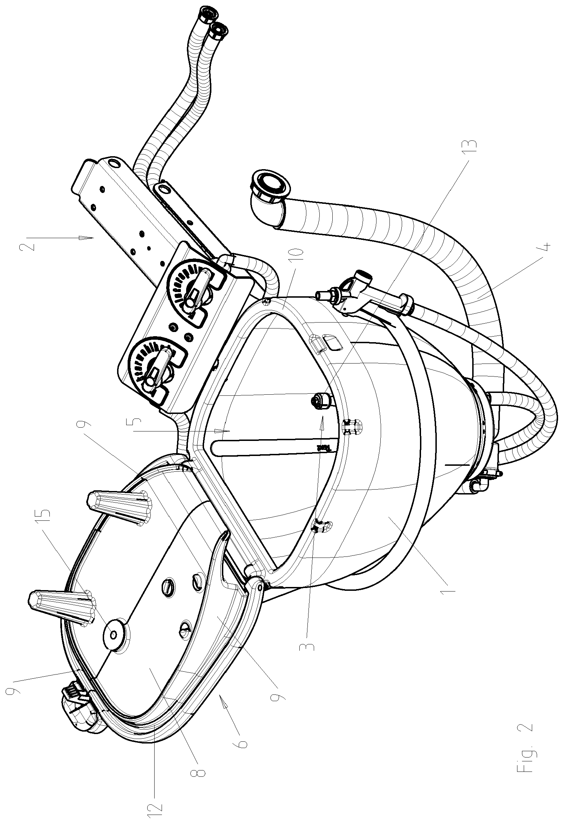

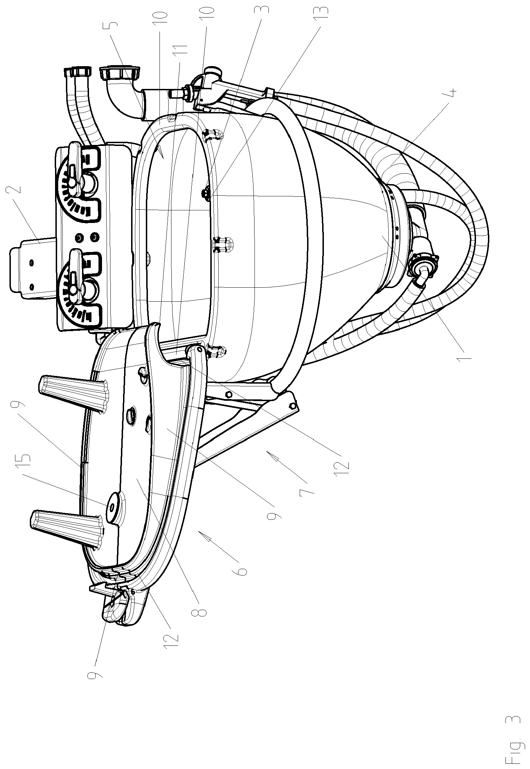

Der Einspülbehälter 1 ist über die Schwenkhalterung 2 in einer kombinierten Schwenk- und Schiebebewegung aus einer an dem nicht dargestellten Rahmen einer landwirtschaftlichen Feldspritze herangeschwenkten und ausgezogenen Stellung entsprechend bewegbar angeordnet. Die landwirtschaftliche Feldspritze ist zum dosierten Ausbringen von mit vorzugsweise als Frischwasser verwendeten Verdünnungsflüssigkeit zu einer Spritzbrühe verdünnten Pflanzenbehandlungsmitteln und/oder Düngemitteln vorgesehen und weist einen nicht dargestellten Spritzmitteltank zur Aufnahme der Spritzbrühe auf. Zum Anmischen der Spritzbrühe ist die Verdünnungsflüssigkeitszuführeinrichtung 3, die an eine Flüssigkeitsleitung 4 angeschlossen ist und der eine Einfüllöffnung 5 aufweisende Einspülbehälter 1 vorgesehen. Dem Einspülbehälter ist ein wahlweise in eine die Einfüllöffnung 5 freigebende Öffnungsstellung, wie in den Fig. 2 und 3 dargestellt ist, oder in eine die Einlauföffnung 5 verschließende Verschlussstellung, wie in Fig.1 dargestellt ist, verschwenkbarer Deckel 6 zugeordnet ist.

Der Deckel 6 ist aus seiner Verschlussstellung gemäß Fig.1 in seiner Öffnungsstellung gemäß Fig. 2 und 3 und umgedreht jeweils um weniger als 180°, vorzugsweise um etwa 170° zu verschwenken. Um den Deckel 6 verschwenken zu können, muss er aus seiner an dem Rahmen der landwirtschaftlichen Feldspritze heranbeschwenkten Stellung über die Schwenkhalterung 2 herausgeschwenkt werden. Der Deckel 6 wird in seiner Öffnungsstellung mittels einer zwischen dem Deckel 6 und dem Einspülbehälter 1 angeordneten Anschlageinrichtung 7 fixiert, die auch verstellbar sein kann.

Wenn der Deckel 6 in seiner Öffnungsstellung gemäß Fig. 2 und 3 sich befindet, weist die sich auf der nach oben weisenden Fläche 8 des Deckels 6 eine Neigung in Richtung der Einfüllöffnung 5 des Einspülbehälters 1 auf. Mit anderen Worten ausgedrückt: Wenn der Deckel 6 sich in seiner die Einlauföffnung 5 freigegebenen Öffnungsstellung zum Einfüllen der Pflanzenbehandlungsmittel und/oder Düngemittel befindet, ist die nach oben weisende Fläche 8 des Deckels 6 zur Einfüllöffnung 5 hin geneigt.

Der Deckel 6 weist im äußeren Bereich in seiner in Öffnungsstellung oberen Seite aus der Oberflächenseite dieser Fläche 8 herausragende zumindest annähernd in U-Form umlaufende Seitenränder 9 auf. Diese Seitenränder 9 sind im Bereich der Einlauföffnung 5 des Einspülbehälters 1 unterbrochen bzw. nicht vorhanden, wie im Ausführungsbeispiel in Fig. 2 und 3 zu sehen ist, sind diese an sich u-förmig verlaufend angeordneten Seitenränder 9 zumindest teilweise im Bereich der Einlauföffnung 5 in Art eines Trichters zusammengeführt, so dass sich auf der Oberfläche 8 des Deckels 6 befindliche Flüssigkeit sicher in die Einfüllöffnung des Einspülbehälters 1 geleitet wird. Durch die Anordnung der Seitenränder 9 auf der vorbeschriebenen Seite 8 des Deckels 6 ist der seitliche Bereich oder die Seitenränder 9 des Deckels 6 gegenüber dem mittleren Bereich dieser Fläche erhöht ausgebildet. Anstelle von Seitenrändern 6 kann auch die Oberseitenfläche 8 des Deckels 6 in Öffnungsstellung konkav ausgebildet sein.

Der Deckel 6 ist derart ausgestaltet und angeordnet, dass er in seiner Öffnungsstellung mit seinem der Einfüllöffnung 5 des Einspülbehälters 1 benachbarten Seite den äußeren oberen Rand 10 des Einspülbehälters 1 in Richtung der Einfüllöffnung 5 überragt, wie insbesondere der Fig. 3 entnommen werden kann. Des Weiteren ist der Deckel 6 in seinem die Einfüllöffnung 5 überragenden Bereich, wenn der Deckel 6 sich in Öffnungsstellung gemäß Fig. 2 und 3 befindet, nach unten abgebogen und weist so eine sich im Bereich der Einfüllöffnung 5 befindliche Abtropfkante 11 auf.

Aufgrund der vorbeschriebenen Ausgestaltung der in Öffnungsstellung des Deckels 6 oberen Seite 8 des Deckels 6 dient diese nach oben weisende Seite 8 des Deckels 6 in seiner Öffnungsstellung als Ablage oder Abstellfläche für Behältnisse für Pflanzenschutz- und/oder Düngemittel. Falls Flüssigkeit dann auf diese Seite des Deckels 6 gelangen sollte, wird diese durch die entsprechend vorgeschriebene Ausgestaltung dieser Seite 8 des Deckels 6 sicher und verlustfrei über die Einfüllöffnung 5 in den Einspülbehälter 1 geleitet.

Außen neben den Seitenränder 9 und unterhalb der Abtropfkante 11 ist an dem Deckel 6 eine mit dem oberen Rand 10 des Einspülbehälters 1 in geschlossener Stellung des Deckels 6 zusammenwirkende Dichtung 12 angeordnet. Aufgrund der Anordnung der in Öffnungsstellung oberen Seite 8 des Deckels 6 im Bereich der Abtropfkante 11 und der umlaufenden oberen Kante 10 des Einspülbehälters 1 kann dieser Bereich des Deckels 6 mit der Abtropfkante 11 die obere Behälterumrandung 10 untergreifen, so dass sich eine geschlossene Abdichtung des Deckels 6 zu der oberen Kante 10 des Einspülbehälters 1 durch die Dichtung 12 sich in einfacher Weise ergibt.

Über die eine Einspüldüse 13 aufweisende Verdünnungsflüssigkeitseinlassmündung der Verdünnungsflüssigkeitzuführeinrichtung 3 wird das Frischwasser, welches als Verdünnungsflüssigkeit verwendet wird, über die Zuführleitung 4 zugeführt. Mit mit diesem dem Einspülbehälter 1 zugeleiteten Frischwasser werden die in den Einspülbehälter 1 eingefüllten Pflanzenbehandlungsmitteln und/oder Düngemitteln zu einer Spritzbrühe vermischt und in bekannter Weise dem nicht dargestellten Spritzmitteltank zugeführt.

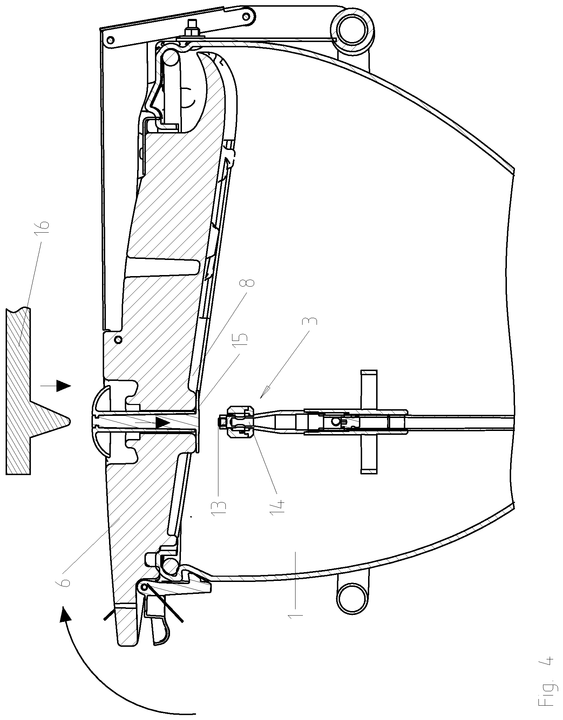

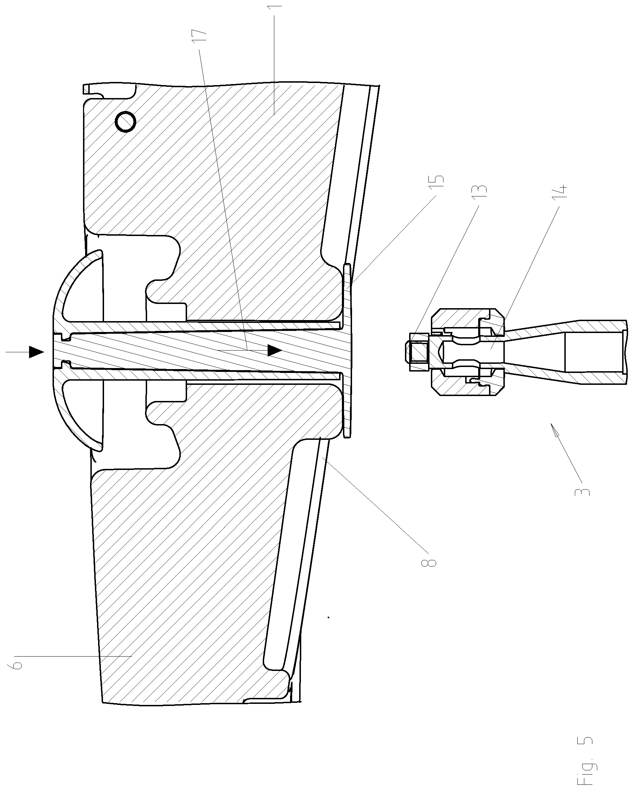

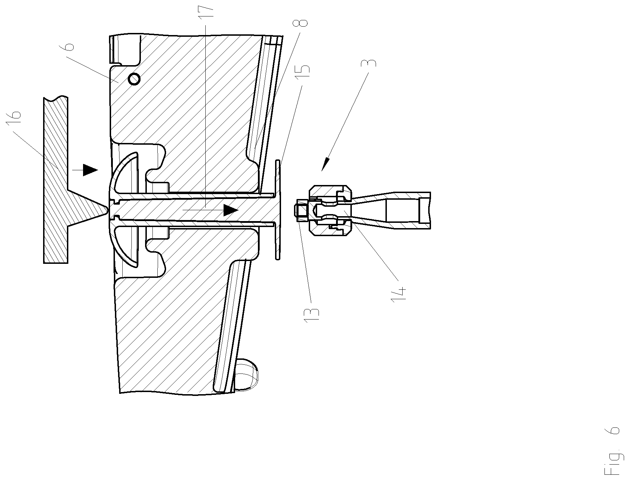

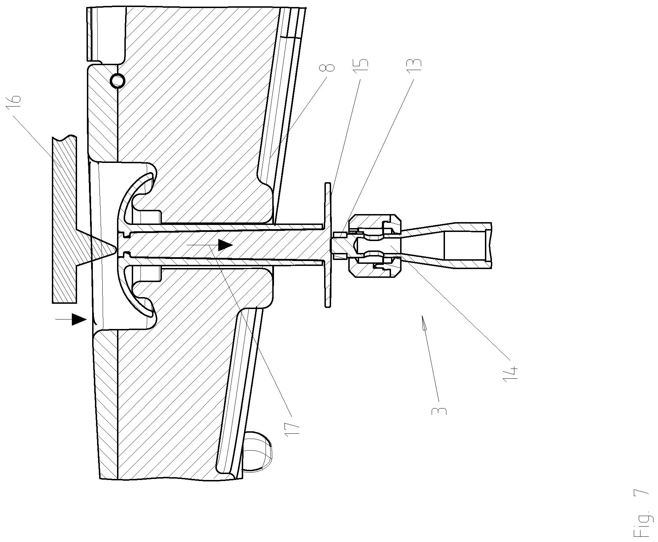

Der Verdünnungsflüssigkeitzuführeinrichtung 3 ist ein Abschaltventil 14 zugeordnet. Der Verdünnungsflüssigkeitzuführeinrichtung 3 ist die Einspüldüse 13, die auch als Reinigungsdüse zur Reinigung des Einspülbehälters 1 verwendet wird, und ein Abschaltventil 14 zugeordnet. Über den sich in Schließstellung befindlichen Deckel 6 gemäß Fig. 1, 4 bis 7 lässt sich das Abschaltventil 14 betätigen. Hierzu drückt in nachbeschriebener Weise der Deckel 6 oder an ihm angeordnete Betätigungselemente 15 das obere Ende der Verdünnungsflüssigkeitseinlassmündung 13 nach unten, so dass das Abschaltventil 14 in Öffnungsstellung gebracht wird. An dem Deckel 6 ist weiterhin zum Betätigen der Verdünnungsflüssigkeitzuführeinrichtung 3 ein aus der Deckelfläche 8 herausragendes Betätigungsansatzelement 15 angeordnet, welches im Ausführungsbeispiel verschiebbar ist. Wenn der Einspülbehälter 1 über die Zwischenposition gemäß Fig.4 bis 6 in die in Fig.7 dargestellte Position, d.h. in ganz an dem nicht dargestellten Rahmen der Feldspritze herangeschwenkter Position gebracht wird und sich dort befindet, wird das Betätigungsansatzelement 15 durch ein an dem nicht dargestellten Rahmen angeordnetes Betätigungsglied 16 in Pfeilrichtung in Pfeilrichtung 17 in Richtung des Einspülbehälters 1 gegenüber dem Deckel 6 verschoben, so dass über das obere Ende 13 der der Verdünnungsflüssigkeitzuführeinrichtung 3 das Abschaltventil 14 betätigt wird, so dass Frischwasser zum Reinigen des Einspülbehälters 1 aus der Einspüldüse 13 herausströmt und den Einspülbehälter 1 in dessen Inneren reinigt. Somit wirken Betätigungsglied 16, Betätigungsansatzelement 15 und Abschaltventil 14 zusammen.

## Patentansprüche

1. Landwirtschaftliche Feldspritze zum dosierten Ausbringen von mit vorzugsweise als Frischwasser verwendeten Verdünnungsflüssigkeit zu einer Spritzbrühe verdünnten Pflanzenbehandlungsmitteln und/oder Düngemitteln mit einem Spritzmitteltank, zumindest einem zumindest eine Verdünnungsflüssigkeitszuführeinrichtung und zumindest eine Einfüllöffnung aufweisenden Einspülbehälter, wobei dem Einspülbehälter ein wahlweise in eine die Einfüllöffnung freigebende Öffnungsstellung oder in eine die Einfüllöffnung verschließende Verschlussstellung verschwenkbarer Deckel zugeordnet ist, wobei die sich auf der nach oben weisenden Fläche (8) des Deckels (6), wenn dieser sich in seiner die Einfüllöffnung (5) freigegebenen Öffnungsstellung zum Einfüllen der Pflanzenbehandlungsmittel und/oder Düngemittel befindet, zur Einfüllöffnung (5) hin geneigt ist, **dadurch gekennzeichnet, dass** der Deckel (6) aus seiner Verschlussstellung in seine Öffnungsstellung und umgedreht jeweils um etwa 170° verschwenkbar ist, dass der Deckel (6) in seiner Öffnungsstellung mit seinem der Einfüllöffnung (5) des Einspülbehälters (1) benachbarten Seite den äußeren oberen Rand (10) des Einspülbehälters in Richtung der Einfüllöffnung (5) überragt, dass der Deckel (6) in seinem die Einfüllöffnung (5) überragenden Bereich nach unten abgebogen ist und/oder zumindest eine sich im Bereich der Einfüllöffnung (5) befindliche Abtropfkante (11) aufweist.

2. Landwirtschaftliche Feldspritze nach Anspruch 1, **dadurch gekennzeichnet, dass** der Deckel (6) in seiner Öffnungsstellung mittels einer zwischen dem Deckel (6) und dem Einspülbehälter (1) angeordneten verstellbaren Anschlageinrichtung (7) fixiert wird.

3. Landwirtschaftliche Feldspritze nach zumindest einem der vorstehenden Ansprüche, dass der seitliche Bereich und/oder die Seitenränder auf der sich in Öffnungsstellung auf der oberen Seite befindlichen Fläche (8) des Deckels (6) gegenüber dem mittleren Bereich dieser Fläche (8) erhöht ausgebildet sind.

4. Landwirtschaftliche Feldspritze nach Anspruch 3, **dadurch gekennzeichnet, dass** die Oberseitenfläche (8) des Deckels (6) in Öffnungsstellung des Deckels (6) konkav ausgebildet ist.

5. Landwirtschaftliche Feldspritze nach Anspruch 4, **dadurch gekennzeichnet, dass** im äußeren Bereich der Oberseitenfläche (8) des Deckels (6) in Öffnungsstellung des Deckels (6) aus der Oberflächenseite (8) dieser Fläche (8) herausragende vorzugsweise zumindest in U-Form umlaufende Seitenränder (9) angeordnet sind, die im Bereich der Einfüllöffnung (5) des Vorratsbehälter (1) unterbrochen oder nicht vorhanden sind.

## Claims

1. Agricultural field sprayer for the metered dispensing of fertilizers and/or crop treatment compositions diluted with diluting liquid, used preferably in the form of fresh water, to form a spray liquor, having a spray tank, at least one induction container having at least one diluting-liquid supply device and at least one filling opening, wherein the induction container is assigned a cover that is pivotable selectively into an open position opening up the filling opening or into a closed position closing the filling opening, wherein the upwardly directed face (8) of the cover (6), when the latter is in its open position opening up the filling opening (5) in order to pour in the crop treatment compositions and/or fertilizers, is inclined towards the filling opening (5), **characterized in that** the cover (6) is able to be pivoted from its closed position into its open position and vice versa in each case through about 170°, **in that** the cover (6), in its open position, projects with its side adjacent to the filling opening (5) of the induction container (1) beyond the outer upper rim (10) of the induction container in the direction of the filling opening (5), **in that** the cover (6) is bent downwards in its region projecting beyond the filling opening (5) and/or has at least one drip edge (11) located in the region of the filling opening (5).

2. Agricultural field sprayer according to Claim 1, **characterized in that** the cover (6) is fixed in its open position by means of an adjustable stop device (7) arranged between the cover (6) and the induction container (1).

3. Agricultural field sprayer according to at least one of the preceding claims, in that the lateral region and/or the lateral edges on the face (8) of the cover (6) that is located on the upper side in the open position are configured in a raised manner compared with the central region of this face (8).

4. Agricultural field sprayer according to Claim 3, **characterized in that** the upper side face (8) of the cover (6) is configured in a concave manner in the open position of the cover (6).

5. Agricultural field sprayer according to Claim 4, **characterized in that**, in the outer region of the upper side face (8) of the cover (6), lateral edges (9) that project out of the surface side (8) of this face (8) in the open position of the cover (6) and extend around preferably at least in a U shape are arranged, said side edges (9) being interrupted or absent in the region of the filling opening (5) of the storage container (1).

## Revendications

1. Pulvérisateur agricole pour décharger de manière dosée des agents phytosanitaires et/ou des engrais dilués sous forme de bouillon pulvérisable avec un liquide de dilution utilisé de préférence sous forme d'eau fraîche, comprenant un réservoir d'agent de pulvérisation, au moins un réservoir d'injection présentant au moins un dispositif d'alimentation en liquide de dilution et au moins une ouverture de remplissage, le réservoir d'injection étant associé à un couvercle pouvant pivoter de manière sélective dans une position d'ouverture ouvrant l'ouverture de remplissage ou dans une position de fermeture fermant l'ouverture de remplissage, la surface (8) du couvercle (6) orientée vers le haut, lorsque celui-ci se trouve dans sa position d'ouverture ouvrant l'ouverture de remplissage (5) pour le remplissage de l'agent phytosanitaire et/ou de l'engrais, étant inclinée par rapport à l'ouverture de remplissage (5), **caractérisé en ce que** le couvercle (6) peut pivoter de sa position de fermeture dans sa position d'ouverture et inversement à chaque fois d'environ 170°, **en ce que** le couvercle (6), dans sa position d'ouverture, dépasse avec son côté adjacent à l'ouverture de remplissage (5) du réservoir d'injection (1) au-delà du bord supérieur extérieur (10) du réservoir d'injection dans la direction de l'ouverture de remplissage (5), **en ce que** le couvercle (6), dans sa région dépassant de l'ouverture de remplissage (5), est recourbé vers le bas et/ou présente au moins une arête d'égouttage (11) se trouvant dans la région de l'ouverture de remplissage (5).

2. Pulvérisateur agricole selon la revendication 1, **caractérisé en ce que** le couvercle (6), dans sa position d'ouverture, est fixé au moyen d'un dispositif de butée réglable (7) disposé entre le couvercle (6) et le réservoir d'injection (1).

3. Pulvérisateur agricole selon au moins l'une quelconque des revendications précédentes, en ce que la région latérale et/ou les bords latéraux sont réalisés de manière rehaussée sur la surface (8) du couvercle (6) se trouvant du côté supérieur dans la position d'ouverture, par rapport à la région centrale de cette surface (8).

4. Pulvérisateur agricole selon la revendication 3, **caractérisé en ce que** la surface latérale supérieure (8) du couvercle (6) est réalisée sous forme concave dans la position d'ouverture du couvercle (6).

5. Pulvérisateur agricole selon la revendication 4, **caractérisé en ce que** dans la région extérieure de la surface du côté supérieur (8) du couvercle (6) dans la position d'ouverture du couvercle (6) sont disposés des bords latéraux (9) saillant hors du côté de surface (8) de cette surface (8), s'étendant sur la périphérie de préférence au moins en forme de U, lesquels sont interrompus ou ne sont pas présents dans la région de l'ouverture de remplissage (5) du réservoir (1).
